# EUROPEAN PATENT APPLICATION

(11) **EP 1 106 889 A1**
(43) Date of publication of application: **13.06.2001**
(21) Application number: 00204195.2
(22) Date of filing: 27.11.2000
(51) Int. Cl.: F16L 11/12

(54) **A hot gas suction hose**

(30) Priority: 06.12.1999 SE 9904427
(71) Applicant: Trelleborg Aktiebolag, 231 22 Trelleborg (SE)
(72) Inventor: Jensen, Jörgen, 230 22 Smygehamn (SE)

(57) **Abstract**

A hot gas suction hose, such as an engine exhaust suction hose, having a thin wall and a large cross-sectional area such as to rapidly cool the hot gases, which hose, in the region close to that end of the hose intended for connection to a hot gas source includes openings that are disposed along the periphery of the hose wall.

## Description

The present invention relates to a hot gas suction hose, such as a vehicle exhaust gas suction hose, that has a thin wall and a large cross-sectional area, for achieving rapid cooling of the hot gases.

There are many different forms of such hoses for receiving hot gases, primarily motor vehicle exhaust gases, for instance in workshops and vehicle testing facilities, where exhaust gases must not be allowed to enter the nearest surroundings for environmental reasons, but must be taken care of and released at some other place, for instance through ventilation ducts. Such exhaust gases normally have a temperature of about 180-190°C. Consequently, in order to ensure that the hoses will have a sufficiently long length of life, it is necessary to cool the hot gas as quickly as possible, which is thus achieved by the combination of a thin hose wall and a relatively large cross-sectional area of the hose.

Such known hoses are described, for instance, in SE-B-445133 (Nederman) and EP-B-0625664 (Trelleborg), and exist in several different designs. Cooling of the exhaust gases by such hoses is so effective as to enable the gas temperature to be lowered by some 100°C during the first two metres of hose length and thereafter by a further 25°C or thereabouts during the next two metres of hose length. In this case, the hoses have a typical inner diameter of about 75 mm, therewith providing manageable hoses that have the requisite flexibility and bendability for practical use. Thus, it is not possible to scale up the dimensions of such hoses to an extent required to further improve their cooling efficiency and therewith the useful length of life of the hose. Instead, it is necessary to take other measures, for instance thinner hose walls or to use hose material that is more resistant to heat. However, no economically defensible improvement of the cooling efficiency of such hoses have hitherto been devised or proposed, even though a desire for such improvement has been expressed commercially.

Surprisingly, it has now been found possible to improve cooling efficiency in both a simple and inexpensive manner, and therewith enable the length of useful life of the hoses discussed in the introduction for the suction of hot gases, such as exhaust gases from internal combustion engines, to be extended. Accordingly, an object of the present invention is to provide such hoses that have a longer length of life, essentially without increasing manufacturing costs.

To this end, the invention is characterised in that the end of the hose intended for connection to a source of hot gas is provided with openings disposed along the circumference of the hose wall.

Although the shape of the openings, their grouping or their distribution along the hose is not critical in principle, the total area of the openings must be adapted to the subpressure acting in the hose, this subpressure being generated by one or more suction fans.

Although the openings can be provided at one location along the hose, they are preferably disposed at several locations in mutually spaced groups.

Openings may be provided along the hose over a distance of about 2 m from said end, although the provision of openings closer to said end would suffice in the majority of cases.

Although the appearance and size of the openings may vary within the scope of the invention, it has been found suitable to provide circular openings having a cross-sectional size of 5-10 mm, suitably about 7 mm.

The first opening or group of openings is suitably disposed at a distance of less than about 500 mm from said end, where the greatest cooling requirement exists. However, it has surprisingly been found that the additional cooling effect caused by suction of air through said openings also has a cooling effect downstream thereof.

If it is possible that hot gas may leak out at times, the openings may be provided with means for preventing gases from flowing out of the hose, for instance in the form of simple rubber check valves or corresponding means.

The invention will now be described in more detail with reference to a practical embodiment thereof.

### EXAMPLE

A test was carried out on a 4" exhaust hose having a naked spiral. A hose drum equipped with a fan was suspended from a transverse beam 4.5 m above the floor.

The hose was unwound from the drum so as to hang down against the floor, and was angled at 90°.

An electric heat gun was used as an "exhaust pipe" and pressed into the hose, and then sealed so that no pirate air could enter.

In carrying out the test, hot air was introduced through the gun and regulated to a temperature of 190°C, whereafter the gas temperature was read off at predetermined points inside the hose.

The following temperatures in °C were measured in a hose that lacked cooling holes, i.e. without openings in accordance with the invention, these temperatures being 120, 105, 95, 70 and 58 at respective distances of 500, 1250, 2000, 4500 and 6500 mm from the gas input end.

There were then tested two hoses that had openings disposed at a distance of 1000 mm from the gas input end. The first hose had four circular holes 7 mm in diameter and distributed uniformly around the hose circumference. The second hose had eight such holes. The temperatures were measured at the same points as those mentioned above, said temperatures being 110, 90, 75, 60, 52°C in the case of hose I, and 105, 75, 68, 55, 44°C in the case of hose II.

A comparison between the tests clearly shows that a perforated hose results in more rapid cooling than an imperforate hose. Thus, at a distance of 500 mm from said end, the gas temperature had dropped by 10°C and 15°C respectively more than a hose which included no holes. It shall be borne in mind that the holes were situated 1000 mm from said end, i.e. 500 mm upstream of the first test location 500 mm from the input end.

In the case of the second testing location at 1250 mm from the input end, the drop in gas temperature was 15°C and 30°C respectively greater than the hose that lacked holes.

In the case of the third testing location at 2000 mm from the input end, the drop in gas temperature was more than 20°C and 27°C respectively greater than in the case of the hose that lacked holes.

In the fourth testing location at 4500 mm from the input end, the drop in gas temperature was 10°C and 15°C respectively greater than in the case of the hose that lacked holes.

At the fifth testing location at 6500 mm from the input end, the gas temperature was respectively 6°C and 14°C lower than in the hose that lacked holes.

It will be apparent that the total opening area is significant to the cooling effect, and that this significance decreases the further from the input end that measurements are taken, which also applies to the significance of the openings on the whole.

## Claims

1. A hot gas suction hose, the wall thickness and cross-section area of which are adapted to achieve rapid cooling of the hot gases, **characterised** in that the hose is provided with openings distributed along the circumference of the hose at that end of said hose at which the hose is intended to be connected to a hot gas source.

2. A hose according to Claim 1, **characterised** in that the openings are disposed in mutually spaced groups.

3. A hose according to Claiml or 2, **characterised** by openings disposed along the hose up to a distance of about 2 m from said end.

4. A hose according to any one of Claims 1-3, **characterised** in that the openings are circular and have a cross-sectional size of 5-10 mm, suitably about 7 mm.

5. A hose according to any one of Claims 1-4, **characterised** in that the first opening or group of openings is disposed at a distance from said end of less than about 500 mm.

6. A hose according to any one of Claims 1-5, **characterised** in that the openings are provided with means for preventing gases escaping from the hose.
